Europäisches Patentamt

European Patent Office

Office européen des brevets

(11) Numéro de publication: **0 028 193**
A1

## (12) DEMANDE DE BREVET EUROPEEN

(21) Numéro de dépôt: 80401508.9

(22) Date de dépôt: 23.10.80

(51) Int. Cl.³: **A 47 B 47/00**, F 16 B 12/40
// E06B9/01

(30) Priorité: 25.10.79 FR 7926494

(43) Date de publication de la demande: 06.05.81
Bulletin 81/18

(84) Etats contractants désignés: **AT BE CH DE FR GB IT LI LU NL SE**

(71) Demandeur: **SOCIETE GENERALE DES EAUX MINERALES DE VITTEL, Avenue des Thermes, F-88800 Vittel (Vosges) (FR)**

(72) Inventeur: **Gautier, Raoul Louis Auguste, Belmont-sur-Vair, Vosges (FR)**

(74) Mandataire: **Casanova, André CABINET ARMENGAUD JEUNE CASANOVA, AKERMAN, LEPEUDRY et al, 23 boulevard de Strasbourg, F-75010 Paris (FR)**

(54) Système pour monter soi-même des meubles ou autres objets et panneaux, meubles et objets divers réalisés avec ce système.

(57) Le système comprend par exemple des éléments tubulaires d'armature $T_1$, $T_2$ qui peuvent être assemblés entre eux, par leurs extrémités, perpendiculairement les uns aux autres, à l'aide d'organes mécaniques de jonction tels que $O_{12}$. Des profilés $U_1$, $U_2$ sont fixés respectivement sur les côtés plats des éléments d'armature formant des sortes de cadres, de façon à pouvoir engager dans ces profilés $U_1$, $U_2$, et éventuellement y fixer les extrémités de barreaux $B_{11}$, $B_{21}$, $B_{22}$.

L'invention permet de monter des objets très divers sans soudure, ni collage, ni perçage.

Système pour monter soi-même des meubles ou autres objets et panneaux, meubles et objets divers réalisés avec ce système.

----------------

La présente invention concerne un système pour monter soi-même, sans soudure, ni collage, ni perçage, des meubles ou autres objets de types très divers.

On connaît déjà des systèmes qui permettent de monter soi-même par exemple des meubles, les différents éléments destinés au montage d'un meuble déterminé étant généralement commercialisés dans une boîte ou un conditionnement individuel, habituellement désigné par le terme américain de "kit".

Les meubles ou autres objets qui peuvent être montés à l'aide de ces systèmes connus sont cependant en général dépourvus de tout caractère esthétique.

On a déjà cherché à étendre les avantages de ces systèmes connus au montage de meubles ou d'autres objets à caractère esthétique, et comportant en particulier des pièces en fer forgé, qui forment par exemple des motifs ornementaux. Le montage de meubles ou d'autres objets, à l'aide de ces systèmes connus, comportant des pièces en fer forgé, nécessite cependant des opérations, notamment de soudage, ou éventuellement de perçage, qui compliquent le montage, nécessitent un outillage spécial, coûteux, et une habileté manuelle que ne possèdent pas toujours les bricoleurs.

Le système selon la présente invention permet de monter soi-même, sans soudure, ni collage, ni perçage, des meubles ou autres objets de types très divers, comportant de préférence des pièces en fer forgé, qui forment par exemple des motifs ornementaux; il est caractérisé en ce qu'il comporte au moins deux éléments d'armature ou de cadre constitués chacun par un profilé, qui présente sur sa surface latérale extérieure au moins un plat s'étendant sur toute la longueur du profilé, notamment un profilé métallique à section creuse polygonale, par exemple carrée, au moins un organe mécanique de jonction pour les extrémités rapprochées de deux éléments d'armature, au moins deux profilés à section en U, dont chacun peut être fixé par sa semelle le long du plat de l'un des éléments d'armature, par des moyens amovibles tels que des clips ou des vis, ainsi que des éléments plats, de préférence en fer forgé, tels que des barreaux droits et/ou des pièces ornementales, cintrées, par exemple en O, en S, ou en spirale, chaque élément plat ayant une largeur voisine de l'écartement des ailes de chaque profilé en U, de manière que les extrémités desdits barreaux ou bien des parties desdites pièces cintrées puissent être engagées dans les profilés en U fixés aux éléments d'armature, et y être elles-mêmes éventuellement fixées par des moyens amovibles appropriés

Le système selon la présente invention offre l'important avantage de permettre le montage de meubles ou d'autres objets, très divers, en utilisant simplement un tournevis, une clé et éventuellement une pince.

Dans une forme de réalisation préférée du système selon la présente invention, les différents éléments plats, tels que des barreaux droits ou des pièces cintrées, peuvent, lorsqu'ils sont juxtaposés, être assujettis les uns aux autres, de préférence par des pinces formant ressort. D'autre part, chaque organe mécanique de jonction pour deux éléments d'armature en tube, par exemple à section carrée, comporte une pièce cubique et au moins un manchon, qui est adaptable à l'intérieur d'un élément d'armature tubulaire, et peut être assujetti à l'une des faces de la pièce cubique, à l'aide de moyens de fixation amovible.

La présente invention concerne également des panneaux rectangulaires ou carrés, réalisés à l'aide du système précédemment défini ; un tel panneau est caractérisé, selon la présente invention, en ce qu'il comporte au moins un cadre rectangulaire ou carré, formé par quatre éléments de cadre, dont les extrémités, rapprochées deux à deux, sont assujetties entre elles par quatre organes mécaniques de jonction, les plats desdits éléments de cadre, sur lesquels quatre profilés en U sont fixés de façon amovible, étant tournés vers l'intérieur du cadre, de manière que les éléments plats engagés partiellement dans lesdits profilés en U, se trouvent sensiblement dans le plan du cadre.

Selon une autre caractéristique de l'invention, au moins une plaque d'un matériau rigide, tel que du verre, du bois ou un matériau synthétique approprié, ou matériau composite, est assujettie au panneau par des moyens amovibles, de façon à recouvrir au moins partiellement ses éléments plats.

La présente invention couvre enfin les applications des panneaux qui viennent d'être définis, à la réalisation de portes, de fenêtres, de plateaux de tables, de cloisons et de meubles divers.

A titre d'exemples, on a décrit ci-dessous et illustré schématiquement au dessin annexé une forme de réalisation préférée du système selon la présente invention, ainsi que plusieurs applications de ce système pour la réalisation de meubles et d'objets divers.

La figure 1 est une vue éclatée, en perspective, d'un coin d'un panneau réalisable à l'aide du système selon la présente invention.

La figure 2 est une vue partielle, également éclatée et en perspective, de l'organe mécanique de jonction prévu au coin du panneau illustré sur la figure 1.

La figure 3 est une vue dans le sens de la flèche III, et en coupe partielle, du coin du cadre illustré sur la figure 1, après assemblage de ses différents éléments.

Les figures 4 et 5 illustrent respectivement des variantes de réalisation de l'organe mécanique de jonction visible sur les figures 1 à 3.

Les figures 6 et 7 montrent en perspective des organes mécaniques de jonction par des éléments d'armature d'un objet ou d'un meuble tridimensionnel.

La figure 8 est une vue en coupe suivant la ligne VIII-VIII de la figure 1, montrant une pince en position d'assujettissement de trois éléments plats du panneau de la figure 1.

La figure 9 est une vue en coupe, analogue à la figure 8, montrant une variante de la pince, en position d'assujettissement de trois éléments plats.

La figure 10 montre une variante de la pince de la figure 9, en position d'assujettissement de deux éléments plats, avant le montage du capuchon.

La figure 11 représente une pince comportant deux pièces en forme de U.

La figure 12 représente la pince de la figure 11, en position d'assujettissement de trois éléments plats.

La figure 13 représente une variante de la pince de la figure 11.

La figure 14 représente la pince de la figure 13, en position d'assujettissement de deux éléments plats.

La figure 15 représente en perspective un coin d'un panneau rectangulaire selon la présente invention, auquel est fixée une plaque d'un matériau rigide.

La figure 16 est une vue en coupe suivant la ligne XVI-XVI de la figure 15.

Les figures 17 et 18 représentent schématiquement, en perspective, un porte-manteau et un lampadaire réalisés à l'aide du système selon la présente invention.

La figure 19 représente en perspective un bahut réalisé à l'aide du système selon la présente invention.

La figure 20 représente un lit réalisé à l'aide du système selon la présente invention.

La figure 21 représente une table réalisée à l'aide du système selon la présente invention.

Les figures 22 à 24 représentent des modes d'assemblage de barreaux à angle droit.

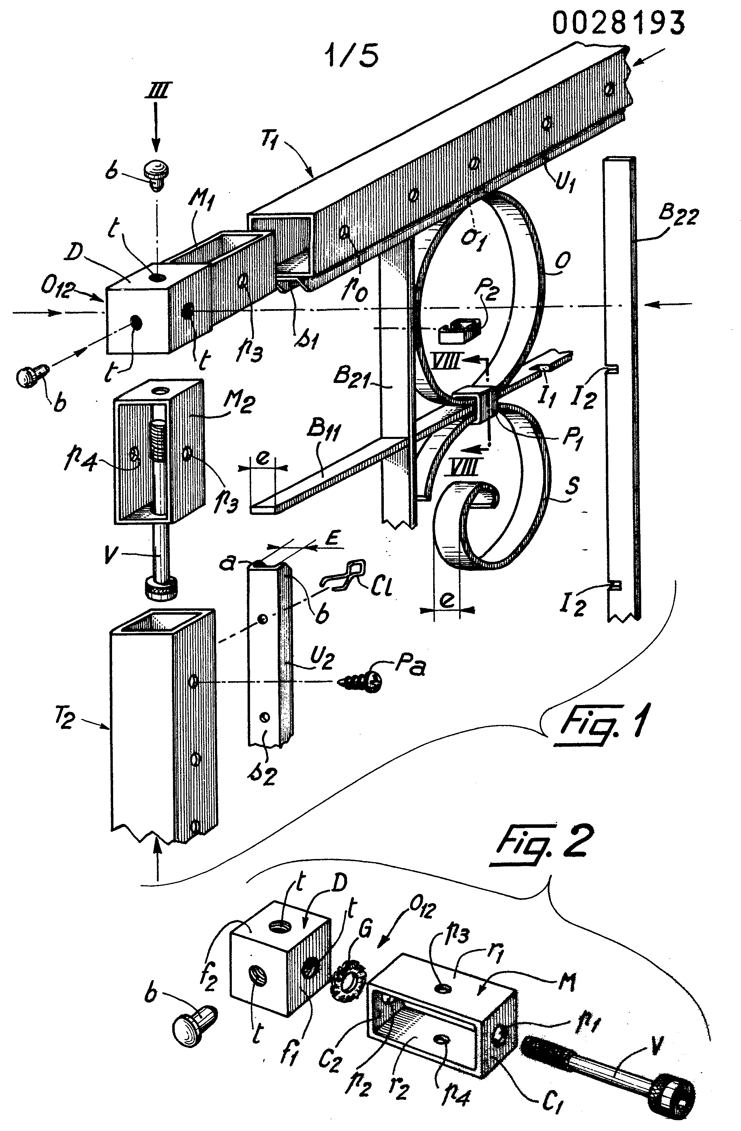

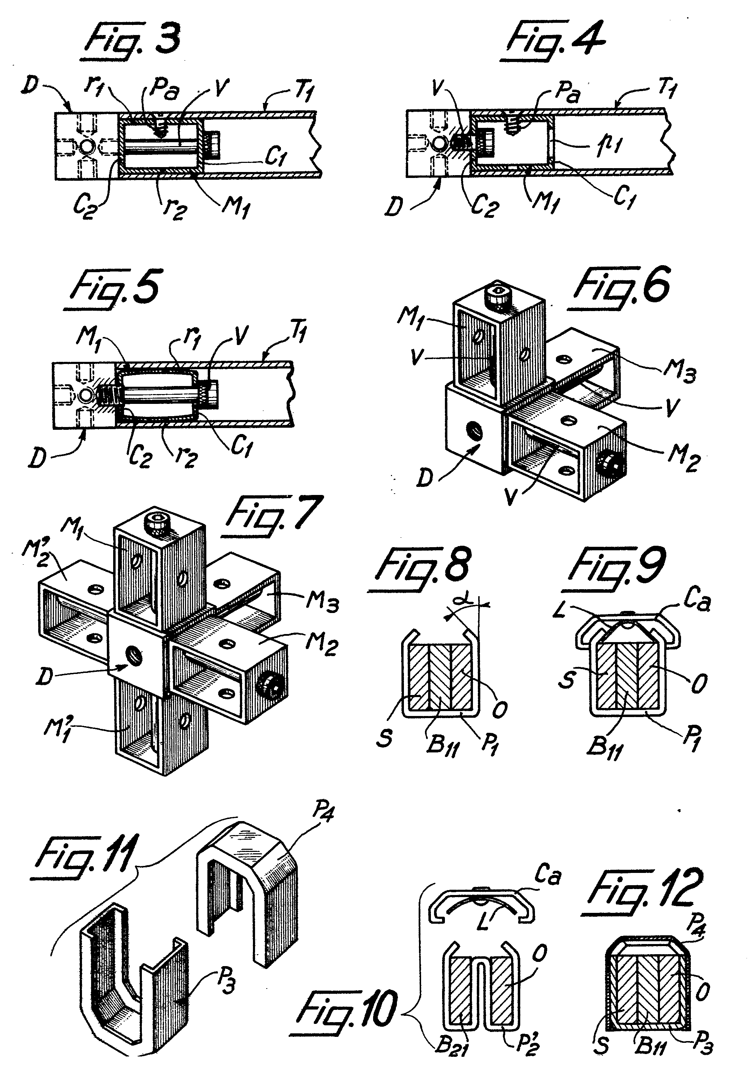

Comme visible sur la figure 1, le système selon la présente invention comporte au moins deux éléments d'armature ou de cadre, constitués chacun, dans la forme de réalisation considérée, par un profilé métallique à section creuse, carrée, $T_1$ ou $T_2$, au moins un organe mécanique de jonction $O_{12}$ pour les extrémités rapprochées des deux éléments d'armature, $T_1$ et $T_2$, au moins deux profilés à section en U, $U_1$ et $U_2$, dont chacun peut être fixé par sa semelle, $s_1$ ou $s_2$, le long de l'un des côtés plats de l'un des éléments d'armature, $T_1$ et $T_2$, par des moyens amovibles tels que des clips $C\ell$, ainsi que des éléments plats, de préférence en fer forgé, notamment des barreaux droits tels que $B_{11}$, $B_{21}$, $B_{22}$, et des pièces ornementales, cintrées par exemple en anneau circulaire, O, en spirale, S; selon la présente invention, chacun des éléments plats tels que $B_{11}$, $B_{21}$, $B_{22}$, O, S présente une largeur $\underline{e}$ voisine de l'écartement, E, des ailes, $\underline{a}$ et $\underline{b}$, de chaque profilé $U_1$, $U_2$; de cette façon, l'une au moins des deux extrémités de chaque barreau tel que $B_{11}$ peut être engagée dans l'un des profilés en U, par exemple $U_2$, entre ses deux ailes, $\underline{a}$ et $\underline{b}$; de même, une partie, $o_1$, de chaque élément plat cintré, tel que O ou S, peut être engagée entre les deux ailes du profilé correspondant, $U_1$; l'extrémité de chaque barreau, tel que $B_{11}$, ou la partie, $o_1$, de chaque élément plat cintré, tel que O, qui est engagée entre les deux ailes d'un profilé, $U_1$ ou $U_2$, peut être assujettie éventuellement à ce profilé, par des moyens amovibles connus, qu'il n'est donc pas nécessaire de décrire en détail; cet assujettissement est cependant facultatif.

Dans la forme de réalisation illustrée sur les figures 1 à 3, chaque organe mécanique tel que $O_{12}$, destiné à la jonction des extrémités rapprochées de deux éléments d'armature tels que $T_1$ et $T_2$, en tube à section carrée, comporte une pièce cubique D, dont les six faces sont taraudées en leur centre, en $\underline{t}$, et deux manchons, $M_1$ et $M_2$, dont chacun est adaptable à l'intérieur d'un élément d'armature tubulaire, $T_1$ ou $T_2$, et peut être assujetti à l'une des faces de la pièce cubique D, à l'aide de moyens de fixation amovible. Dans l'exemple de réalisation illustré sur les figures 1 à 3, chaque manchon, M, est un élément de tube à section rectangulaire, com-

portant deux parois carrées $c_1$ et $c_2$ (figure 2), de dimensions adaptées aux dimensions intérieures de chaque élément tubulaire d'armature , $T_1$ ou $T_2$, et deux parois rectangulaires, $r_1$ et $r_2$; chacune des parois carrées, $c_1$ et $c_2$, de chaque manchon tel que M est traversée par un perçage, $p_1$ ou $p_2$, dimensionné de façon à permettre le libre passage de la longue tige d'une vis, V, et le vissage de son extrémité filetée dans l'un des taraudages $\underline{t}$ de la pièce cubique, D, la tête de ladite vis, V, étant cependant retenue par le pourtour du perçage, $p_1$, de la paroi carrée $c_1$.

Un panneau rectangulaire ou carré peut être réalisé à l'aide d'un système analogue à celui illustré sur la figure 1, et précédemment décrit, mais comportant quatre éléments tubulaires de cadre, tels que $T_1$ et $T_2$, de longueurs deux à deux égales, quatre organes mécaniques de jonction, tels que $O_{12}$, identiques entre eux, quatre profilés en U tels que $U_1$ et $U_2$, ainsi qu'un nombre approprié de barreaux plats tels que $B_{11}$, $B_{21}$, $B_{22}$, et de pièces cintrées telles que O et S, de préférence en fer forgé, et un nombre approprié d'accessoires mécaniques usuels, tels que clips, vis, rondelles diverses... etc.. Ces différents éléments, permettant d'assembler un panneau rectangulaire ou carré, par exemple à usage de porte, de fenêtre, de cloison fixe ou mobile... etc, seront de préférence commercialisés dans une boîte, ou un conditionnement individuel, du type connu sous la désignation américaine de "kit". L'assemblage d'un tel panneau selon la présente invention, à partir de ses différents éléments, nécessite seulement les opérations suivantes, qui peuvent être effectuées à l'aide d'outils usuels tels que tournevis, clés et pinces diverses, sans aucune opération de perçage, de collage, de soudage ou de rivetage :

on procède tout d'abord à la fixation des profilés $U_1$ et $U_2$ sur les côtés des éléments tubulaires de cadre, $T_1$ et $T_2$, comme indiqué sur la figure 1, à l'aide de clips tels que $c\ell$. On assemble ensuite les quatre organes mécaniques de jonction tels que $O_{12}$, en fixant leurs deux manchons respectifs, $M_1$ et $M_2$, sur deux faces de la pièce cubique, D, qui sont perpendiculaires l'une à l'autre (par exemple les faces, $f_1$ et $f_2$, sur la figure 2), de manière que l'organe de jonction tel que $O_{12}$ se présente sous la forme d'une équerre; des rondelles Grover, telles que G (figure 2), peuvent être interposées entre la face carrée, $c_2$, du manchon M, et la face, $f_1$, de la pièce cubique D, sur laquelle le manchon M doit être fixé. Des bouchons, b, (figures 1 et 2), par exemple en matière synthétique, peuvent être par exemple engagés dans les trous taraudés, t, des faces de chaque pièce cubique, D, sur lesquelles n'est fixé aucun manchon tel que M, pour améliorer l'aspect esthétique de l'organe de jonction. Les deux éléments tubulaires de cadre, $T_1$ et $T_2$ (figure 1) sont alors enfilés respectivement par dessus les manchons, $M_1$ et $M_2$, de manière que leurs extrémités viennent en butée contre les bords des faces, $f_1$ et $f_2$, de la pièce cubique, D, dont la longueur des arêtes est de préférence également aux dimensions extérieures des tubes à section carrée, $T_1$ et $T_2$, de façon que ladite pièce cubique, D, vienne exactement raccorder, sans discontinuité, les éléments de cadre, $T_1$ et $T_2$, et améliorer ainsi l'effet esthétique obtenu.

Chacun des manchons, $M_1$ et $M_2$, de l'organe de jonction en forme d'équerre, $O_{12}$, est alors assujetti dans l'extrémité correspondante de l'élément tubulaire de cadre, $T_1$ ou $T_2$, par une vis du type Parker, Pa, qui est engagée à travers un trou, po, de l'une des parois latérales de l'élément tubulaire, $T_1$ ou $T_2$, et un perçage, $p_3$, de la paroi rectangulaire, $r_1$ ou $r_2$, du manchon M, comme visible notamment sur la vue en coupe partielle de la figure 3, qui montre un coin du cadre rectangulaire, assemblé par les opérations qui viennent d'être indiquées.

On peut alors engager l'une des extrémités de chacun des barreaux tels que $B_{21}$ et $B_{22}$ dans le profilé $U_1$, puis l'une des extrémités de chacun des barreaux tels que $B_{11}$, dans le profilé $U_2$. Dans l'exemple de réalisation illustré sur la figure 1, chaque barreau tel que $B_{22}$, destiné à être monté parallèlement à l'un des éléments de cadre, par exemple $T_2$, est pourvu d'encoches, $I_2$, de profondeur voisine ou égale à e/2, et de largeur à peine supérieure à l'épaisseur des barreaux tels que $B_{11}$, destinés à être montés parallèlement à l'autre élément de cadre, $T_1$; ces encoches, $I_2$, de même que les encoches homologues, $I_1$, dont sont pourvus les barreaux tels que $B_{11}$, peuvent être régulièrement espacées d'une extrémité à l'autre du barreau correspondant, mais cette disposition est facultative.

Elle permet cependant de réaliser une sorte de grillage à mailles régulières, rectangulaires, ou éventuellement carrées. Dans les mailles, de préférence carrées, de cette sorte de grillage peuvent être insérées, au fur et à mesure de la mise en place des différents barreaux, des pièces ornementales, telles que O et S, ou ayant d'autres formes plus ou moins complexes. Selon une caractéristique facultative de l'invention, les différents éléments plats tels que les barreaux droits, $B_{11}$, $B_{21}$, $B_{22}$, ou les pièces cintrées tels que O, S, peuvent, lorsqu'ils sont juxtaposés, être assujettis les uns aux autres, de préférence par des pinces formant ressort, telles que $P_1$ (figure 1). La figure 8 montre une forme de réalisation de la pince $P_1$, constituée par une lame de ressort pliée en U, les extrémités des deux ailes du U étant repliées vers l'intérieur de la pince d'un angle α, notablement inférieur à 90 degrés. La mise en place de cette pince, $P_1$, pour assujettir entre eux, en les serrant, les trois éléments plats, $B_{11}$, O et S, nécessite seulement d'écarter suffisamment les deux ailes du U pour permettre son engagement de part et d'autre des éléments plats O et S; la pince se referme ensuite par élasticité, et les extrémités repliées de ses ailes la maintiennent en place.

Lorsque tous les éléments plats, tels que des barreaux et éventuellement des pièces cintrées, du panneau ont été mis en place, on engage par exemple l'un des manchons du second organe mécanique de jonction, analogue à $O_{12}$ ( et non représenté), dans l'extrémité de l'élément tubulaire de cadre $T_1$, opposée à l'organe de jonction $O_{12}$, puis l'on enfile l'une des extrémités de l'autre élément tubulaire de cadre, de même longueur que l'élément tubulaire $T_2$, sur le manchon libre dudit second organe de jonction, les deux pièces étant fixées ensemble avec une vis Parker telle que Pa. On engage ensuite un des manchons de chaque troisième et quatre organes mécaniques de jonction (non représentés) dans les extrémités du quatrième élément tubulaire de cadre (également non représenté), dans lesquelles lesdits manchons peuvent être également fixés par des vis Parker. Pour terminer l'assemblage du cadre, il suffit alors de munir le quatrième élément tubulaire de son profilé en U, et de le présenter de telle façon que les manchons libres des troisième et quatrième organes de jonction puissent être engagés par un simple mouvement de translation dans les extrémités libres respectives de l'élément de cadre $T_2$ et de l'élément de cadre qui lui est parallèle. Le mode d'assemblage d'un panneau selon la présente invention, qui vient d'être décrit, est facultatif; l'ordre des opérations d'assemblage peut en particulier être modifié.

Les différents éléments du système selon la présente invention, tel qu'il est illustré aux figures 1 à 3 et vient d'être décrit, sont susceptibles de nombreuses variantes, entrant toutes dans le cadre de l'invention.

Comme on l'a indiqué, les différents éléments tels que $T_1$, $T_2$, $U_1$, $U_2$, D, $M_1$, $M_2$ sont de préférence métalliques, pour présenter non seulement une meilleure résistance mécanique, mais aussi un meilleur aspect esthétique; il peut s'agir en particulier d'éléments en acier inoxydable, d'éléments chromés ou recouverts, par voie chimique, d'un revêtement noir satiné. Cependant, pour certaines applications, ces mêmes éléments du système selon la présente invention peuvent être constitués en tout autre matériau approprié, par exemple en matière synthétique. De même, les éléments plats tels que les barreaux $B_{11}$, $B_{21}$, $B_{22}$, et les pièces cintrées telles que O et S, bien qu'ils soient de préférence constitués en fer forgé, pour des raisons esthétiques, peuvent être aussi constitués en un autre matériau métallique, ou en tout autre matériau ornemental, plus léger.

Chacun des éléments de cadre tels que $T_1$ et $T_2$ peut être constitué par un profilé métallique à section creuse polygonale, non nécessairement carrée ou rectangulaire; pour certaines réalisations, en particulier en matériau léger, on peut aussi utiliser des profilés pleins, pourvu que chacun présente sur sa surface latérale extérieure au moins un plat, s'étendant sur toute la longueur du profilé, pour la fixation du profilé en U, correspondant, tel que $U_1$ et $U_2$. Pour la constitution d'un cadre, les plats des profilés constituant les éléments de cadre, c'est-à-dire les côtés du cadre, doivent être évidemment tournés vers l'intérieur du cadre.

Comme visible sur la figure 4, chaque manchon, tel que $M_1$, de chaque organe mécanique de jonction peut être fixé à la face correspondante de la pièce cubique, D, par une vis, V, à tige courte, dont la tête prend appui directement sur la paroi carrée, $c_2$, dudit manchon $M_1$, pourvu cependant que le perçage, $p_1$, de la paroi, $c_1$, dudit manchon $M_1$ ait des dimensions suffisantes pour permettre le passage de la tête de la vis, V, ainsi éventuellement que de l'outil destiné à son serrage. Bien entendu, dans le cas des réalisations illustrées sur les figures 1 à 3, les manchons tels que $M_1$ peuvent être fermés de tous côtés, c'est-à-dire comporter deux parois latérales rectangulaires en plus de $r_1$ et $r_2$; avec un tel manchon, la cloison carrée, $c_1$, est alors inutile lorsque le serrage est assuré par une vis, V, à tige courte comme sur la figure 4.

0028193

Dans la variante illustrée par contre sur la figure 5, les deux seules parois rectangulaires, parallèles l'une à l'autre, $r_1$ et $r_2$, de chaque manchon tel que $M_1$, sont suffisamment minces et élastiques pour se cintrer vers l'extérieur du manchon, lorsque la tête de la vis V est serrée contre la paroi carrée, $c_1$, du manchon, qui est opposée à la pièce cubique D, de façon à bloquer ledit manchon $M_1$ à l'intérieur de l'élément tubulaire d'armature à section carrée, $T_1$. Bien entendu, le blocage obtenu — qui ne nécessite plus de vis Parker telle que Pa sur les figures 1 à 4 — est d'autant meilleur que le rapport de la longueur du manchon, $M_1$, à ses dimensions transversales est plus élevé.

Les figures 6 et 7 montrent comment une même pièce cubique, D, dont par exemple toutes les faces sont taraudées en leurs centres respectifs, peut être associée par des vis, V, à des manchons en nombre égal à trois (figure 6), fixés sur trois faces perpendiculaires entre elles, ou même en nombre égal à cinq (figure 7). Un organe de jonction à trois manchons, $M_1$ à $M_3$, tel que celui de la figure 6, permet évidemment, par son troisième manchon, $M_3$, de fixer, par exemple au coin d'un panneau rectangulaire, matérialisé par les organes, $M_1$-D-$M_2$, une autre pièce, par exemple un autre élément d'armature, s'étendant dans une direction perpendiculaire à celle dudit panneau. Un organe de jonction tel que celui de la figure 7 offre, en plus de la possibilité de celui de la figure 6, celle de raccorder — à l'aide des manchons, $M_1$, $M'_1$, $M_2$ et $M'_2$ — quatre éléments tubulaires d'armature, situés dans un même plan, et correspondant par exemple à des côtés communs de quatre panneaux rectangulaires situés dans un même plan. Les éléments d'armature enfilés sur les manchons, $M_2$ et $M_3$, par exemple pourraient constituer les côtés d'un cinquième panneau, perpendiculaire aux quatre panneaux mentionnés. Bien entendu, un sixième manchon, ainsi éventuellement qu'un sixième élément d'armature, pourraient être fixés sur la sixième face, taraudée, de la pièce cubique D. On conçoit que les systèmes selon la présente invention, équipés d'organes mécaniques de jonction tels que ceux illustrés sur les figures 6 et 7, et analogues, permettent non seulement de réaliser des panneaux juxtaposés dans un même plan, mais aussi de raccorder entre eux des panneaux perpendiculaires les uns aux autres, pour constituer en particulier les différentes parois d'un meuble parallélépipédique.

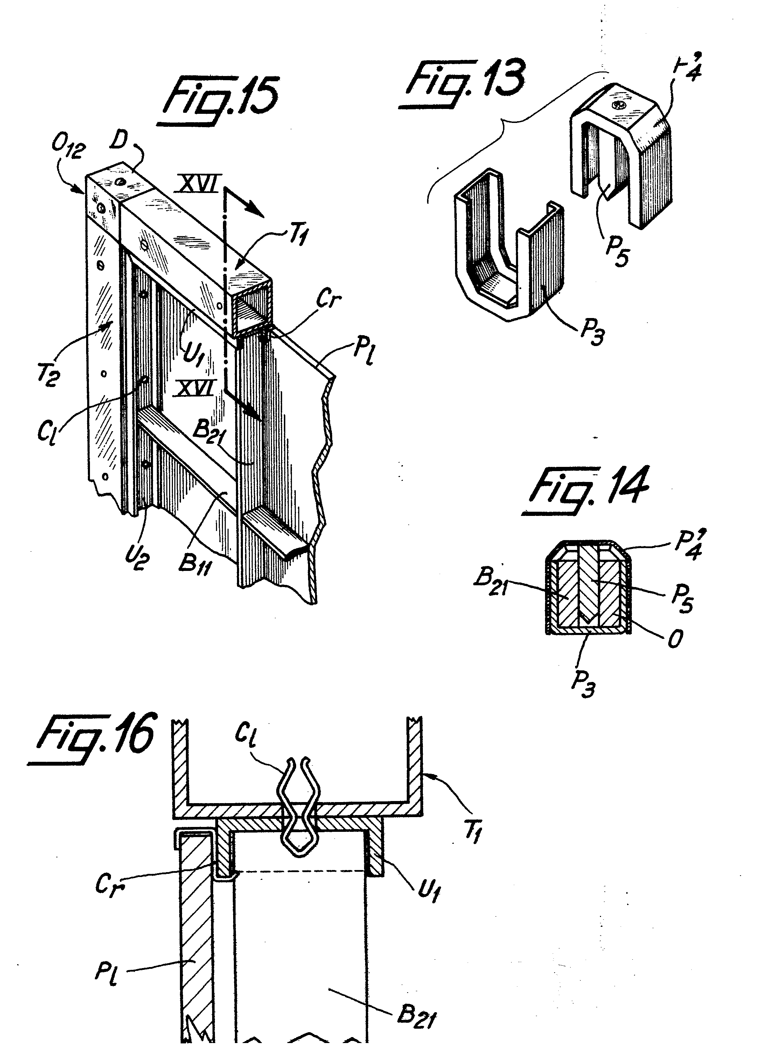

La figure 9 représente un perfectionnement de la pince à ressort, $P_1$, de la figure 8, dans lequel l'ouverture de la pince en U, placée en position de serrage de plusieurs éléments juxtaposés tels que S, $B_{11}$, O (figure 1), peut être fermée par un capuchon, Ca, venant coiffer les extrémités repliées des ailes de la pince; une lame de ressort, L, fixée en son milieu sur la face intérieure du capuchon, Ca, par exemple par un rivet, est en outre dimensionnée et cintrée de façon à venir alors s'engager en dessous des extrémités repliées des ailes de la pince en U, $P_1$.

La pince, $P_2$, qui, sur la figure 1, est destinée à assujettir l'un à l'autre les deux éléments plats, $B_{21}$ et O, dans leur zone de contact, peut être remplacée par la pince élastique en forme de W, $P'_2$, qui est représentée sur la figure 10; un capuchon, Ca, par exemple en tôle emboutie, muni intérieurement d'une lame de ressort, L, peut être utilisé, comme illustré sur la figure 9, pour fermer l'ouverture de la pince, $P'_2$, en position de serrage des deux éléments plats $B_{21}$ et O.

La figure 11 représente, en perspective et en vue éclatée, une pince constituée par deux pièces en tôle emboutie en forme de U, $P_3$ et $P_4$; la figure 12 est une vue en coupe, analogue aux figures 8 et 9, qui montre comment la pince $P_3$-$P_4$ de la figure 11 peut être utilisée, en remplacement de la pince $P_1$ des figures 1 et 8, pour assujettir entre eux et serrer trois éléments plats tels que $B_{11}$, S et O.

Dans la variante illustrée sur la figure 13, l'une des deux pièces en U, $P'_4$, comporte un élément plat intermédiaire, $P_5$, qui est fixé par une extrémité au milieu de la semelle de la pièce en forme de U, $P'_4$, par exemple par soudage ou rivetage, de telle façon que l'élément plat, $P_5$, s'étende à peu près parallèlement et à égales distances des deux ailes de la pièce en U, $P'_4$. La figure 14 est une coupe, analogue à la figure 10, qui montre comment la pince $P_3$-$P'_4$ de la figure 13 peut être utilisée (à la place par exemple de la pince $P_2$ de la figure 1) pour assujettir l'une à l'autre et serrer deux éléments plats tels que $B_{21}$ et O.

La figure 15 représente, en perspective, un coin d'un panneau rectangulaire selon la prévente invention, qui a été assemblé à partir du système d'éléments illustré sur la figure 1 et précédemment décrit. Ce panneau rectangulaire comporte en outre une plaque, $P\ell$, d'un matériau rigide, tel que du verre, du bois, ou un matériau synthétique approprié; cette plaque rigide, $P\ell$, est assujettie au panneau de façon à recouvrir au moins ses éléments plats tels que les barreaux $B_{11}$ et $B_{21}$; dans la forme de réalisation illustrée sur la figure 15 et sur la vue en coupe de la figure 16, la plaque rigide, $P\ell$, a la même forme, rectangulaire, que le cadre, mais des dimensions un peu inférieures à ses dimensions intérieures, et les bords de ladite plaque, $P\ell$, sont fixés aux ailes des profilés en U, tels que $U_1$ et $U_2$, par des moyens amovibles, notamment des crochets doubles, Cr, constitués chacun par une lame élastique mince, de préférence métallique, pliée en S. On voit clairement sur la figure 16 que chaque crochet, Cr, comporte, de part et d'autre d'un élément intermédiaire plan, inséré entre une aile du profilé, $U_1$, et le bord de la plaque $P\ell$, deux éléments plats à extrémités recourbées, qui viennent coiffer respectivement le chant de la plaque $P\ell$ et le bord libre de l'aile correspondante du profilé $U_1$. Des crochets tels que Cr sont montés le long de chaque bord de la plaque rigide $P\ell$, de préférence à des intervalles réguliers, choisis de façon à assurer une fixation fiable de ladite plaque P$\ell$ au panneau selon la présente invention.La figure 16 montre également l'un des clips, C$\ell$, qui assure la fixation amovible du profilé $U_1$ sur la face de l'élément tubulaire de cadre $T_1$, qui est tournée vers l'intérieur du panneau, ainsi que l'extrémité de l'un des barreaux, notamment $B_{21}$, qui est engagée dans ledit profilé $U_1$.

Bien entendu, le mode de fixation de la plaque rigide, telle que P$\ell$, au panneau selon la présente invention est matière à option; un panneau rigide tel que, P$\ell$, pourrait être aussi fixé, par ses bords, en utilisant des moyens amovibles appropriés, par exemple aux éléments tubulaires de cadre, tels que $T_1$.Bien entendu, une plaque rigide telle que P$\ell$ peut avoir des dimensions notablement inférieures à celles du panneau sur lequel elle doit être adaptée, de manière à recouvrir seulement une région de ce panneau, par exemple sa moitié inférieure s'il s'agit d'une porte. Deux plaques rigides telles que P$\ell$ peuvent être aussi éventuellement adaptées sur les deux faces d'un panneau rectangulaire selon la présente invention; dans ce cas, cependant, si l'une des deux plaques rigides est opaque, l'autre est nécessairement transparente, par exemple en verre, pour laisser visible les barreaux tels que $B_{11}$, $B_{21}$..., et les pièces ornementales telles que O et S (figure 1).

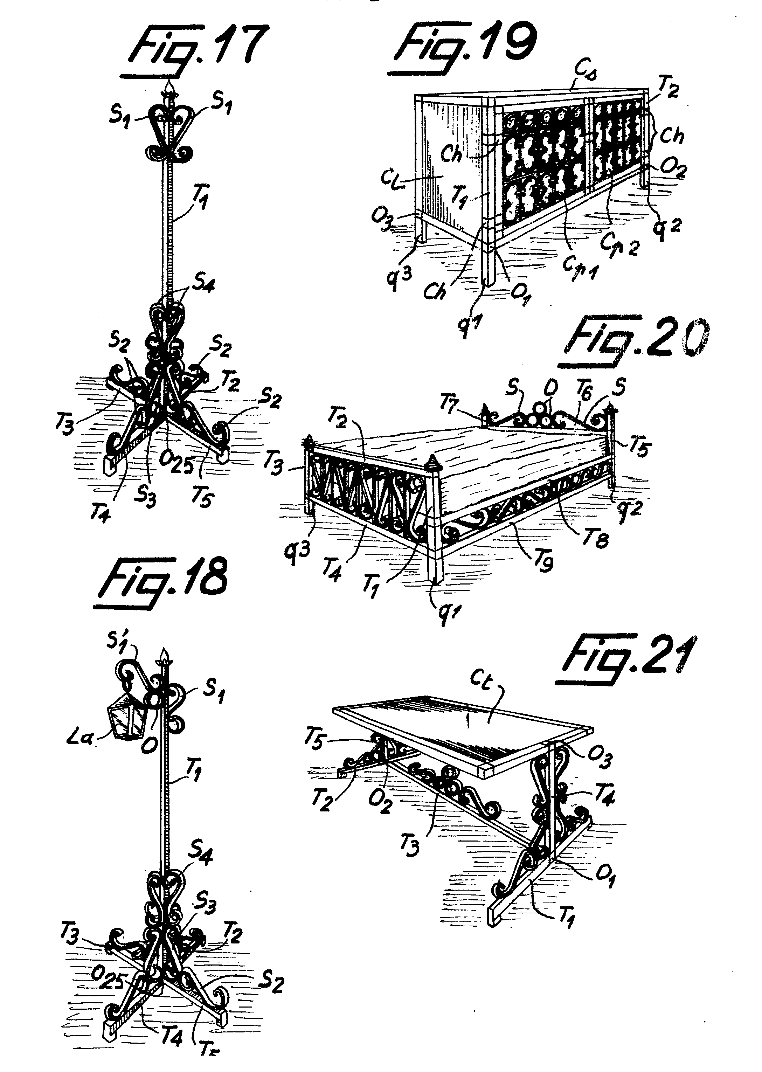

La figure 17 représente, en perspective, un porte-manteau décoratif, réalisé à l'aide du système selon la présente invention. Il comporte essentiellement des éléments d'armature, $T_1$ à $T_5$, en tubes métalliques à section carrée, recouverts de préférence d'un revêtement noir mat. Alors que les quatre éléments d'armature $T_2$ à $T_5$, disposés dans des directions horizontales, perpendiculaires l'une à l'autre, servent de, ou bien portent des pieds, l'élément d'armature $T_1$, notablement plus long, est supporté verticalement par la pièce cubique (non visible sur la figure 17) de l'organe mécanique , $O_{25}$, servant à la jonction

des quatre pieds, $T_2$ à $T_5$, comme précédemment décrit et illustré notamment sur la figure 2. Des profilés en U sont fixés, comme précédemment décrit, sur les faces supérieures des quatre éléments tubulaires, $T_2$ à $T_5$, et sur les quatre faces latérales de l'élément tubulaire $T_1$. Les profilés en U fixés, par exemple par des clips, sur les faces supérieures des éléments tubulaires, $T_2$ à $T_5$, peuvent servir à la fixation, par des moyens amovibles appropriés, de pièces ornementales en fer forgé, $S_2$. Les profilés en U fixés sur les quatre côtés de l'élément d'armature $T_1$ sont prévus de préférence seulement à l'extrémité supérieure de celui-ci, pour la fixation, par les moyens amovibles déjà indiqués, de quatre pièces cintrées, $S_1$, permettant l'accrochage de vêtements, ainsi qu'à sa partie inférieure, pour la fixation de plusieurs pièces décoratives cintrées, en fer forgé, $S_3$ et $S_4$. Les pièces décoratives cintrées $S_2$, $S_3$ et $S_4$, sont disposées de préférence de façon que certaines de leurs parties respectives viennent en contact les unes avec les autres, dans des zones où lesdites pièces en contact peuvent être alors assujetties entre elles en utilisant des pinces de l'un des types illustrés sur les figures 8 à 14.

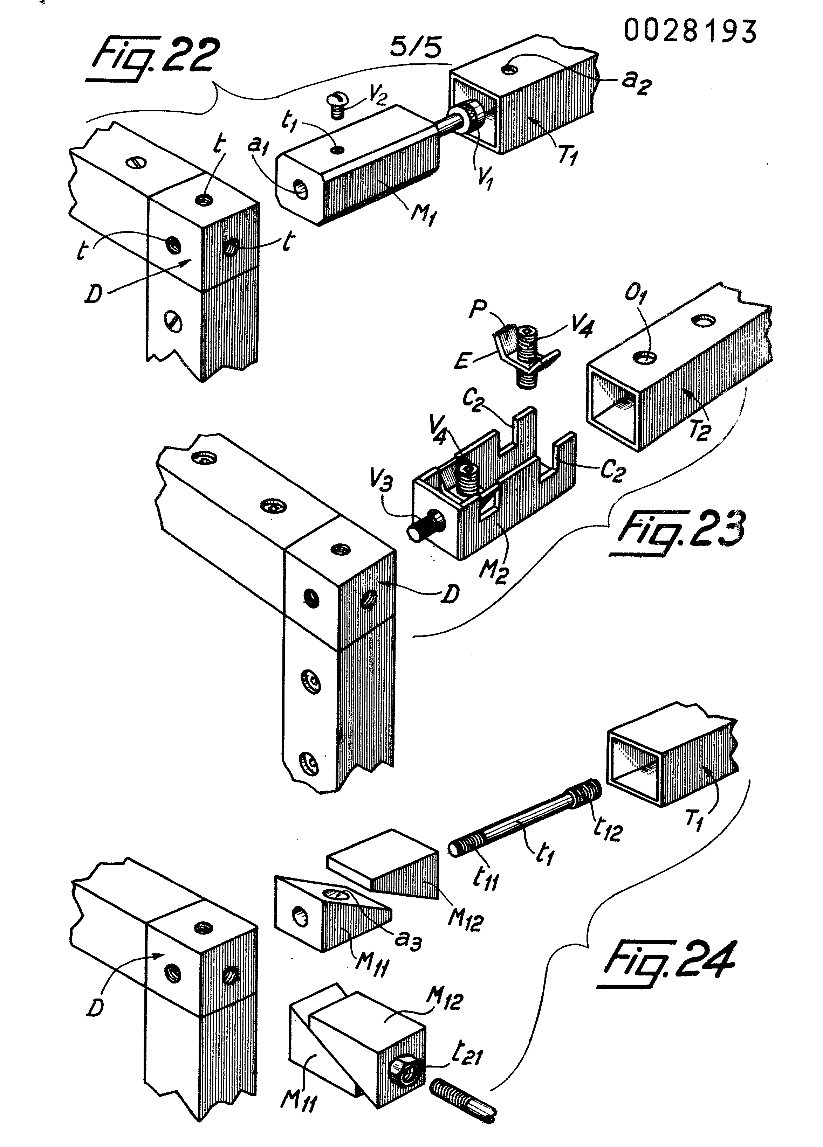

La figure 18 représente un lampadaire, dont la structure ne diffère de celle du porte-manteau de la figure 17 que par les points suivants : dans l'un des profilés en U (non visibles), qui sont fixés de façon amovible près de l'extrémité supérieure de l'élément d'armature, $T_1$, sur l'une de ses faces planes, sont fixées, par des moyens appropriés, une pièce cintrée décorative en fer forgé, O, et, au-dessus de celle-ci, une pièce cintrée en fer forgé, $S'_1$, en forme de S, dont l'une des extrémités recourbée, porte, par l'intermédiaire d'un anneau, une lanterne La; les deux pièces cintrées, O et $S'_1$, peuvent être assujetties l'une à l'autre par une pince de l'un des types précédemment décrits.

La figure 19 représente un bahut réalisé à l'aide du système selon la présente invention. Ce bahut est constitué essentiellement par un coffre parallélépipédique, dont les faces inférieure et supérieure, la face arrière et les deux faces latérales sont constituées par des panneaux rectangulaires selon la présente invention, tels que CL. Chacun de ces panneaux rectangulaires est de préférence revêtu d'une plaque rigide en matériau décoratif; si le matériau rigide utilisé pour constituer cette plaque est opaque, et situé vers l'extérieur du meuble, comme c'est le cas par exemple pour les parois latérales telles que CL, il suffit de munir le panneau rectangulaire correspondant d'une plaque de bois, de matériau composite ou synthétique, à l'exclusion de toute pièce cintrée décorative, ces barreaux plats, constitués en une matière rigide bon marché devant seulement contribuer à la rigidité du panneau. Pour d'autres panneaux du meuble, qui sont bien visibles et pour lesquels on recherche par suite un effet décoratif, par exemple son panneau supérieur Cs et surtout les deux panneaux rectangulaires, Cp1 et Cp2, qui constituent les portes de la façade du bahut, on peut prévoir des barreaux de fer forgé entre lesquels sont insérées des pièces cintrées décoratives (telles que O et S sur la figure 1), également en fer forgé, et assemblées entre elles ainsi qu'aux barreaux par des pinces de l'un des types précédemment décrits. Pour ces panneaux à effet décoratif, bien entendu, on peut prévoir une plaque rigide en matériau opaque, montée sur la face du panneau qui est tournée vers l'intérieur du meuble, en particulier pour son panneau supérieur Cs, et éventuellement une plaque de verre sur la face du panneau tournée vers l'extérieur du meuble, de façon à laisser apparaître les éléments ornementaux en fer forgé; bien entendu, cette plaque de verre est facultative pour les panneaux de porte Cp1 et Cp2. Ces derniers doivent être évidemment munis d'éléments de charnière, Ch, coopérant avec des éléments fixes. Les éléments de charnière mobiles doivent être évidemment insérés dans les éléments de cadre correspondants des panneaux de porte de Cp1 et Cp2, qui peuvent être à cet effet constitués en plusieurs éléments, auxquels les éléments de charnière peuvent être raccordés à l'aide de manchons, en utilisant les moyens décrits précédemment pour les organes mécaniques de jonction. Les éléments fixes de charnière peuvent être insérés, en utilisant les mêmes moyens, dans les éléments verticaux de cadre, $T_1$ et $T_2$ qui constituent les deux coins avant du coffre. Ce dernier peut lui-même être supporté par quatre pieds, q1 à q4, en tubes à section carrée, qui peuvent être eux-mêmes fixés, par les moyens précédemment décrits, sur les faces inférieures des pièces cubiques des quatre organes inférieurs de jonction du coffre, tels que $O_1$, $O_2$, $O_3$.

La figure 20 représente un châssis de lit, qui comprend essentiellement un panneau rectangulaire de pied, constitué par quatre éléments de cadre en tubes carrés, $T_1$ à $T_4$, entre lesquels sont insérés des barreaux verticaux et des pièces décoratives, cintrées en S, constituées de préférence en fer forgé, comme lesdits barreaux, ainsi qu'un panneau rectangulaire de tête, dont on voit seulement les éléments de cadre, également en tubes carrés, $T_5$ à $T_7$; les éléments de cadre verticaux, $T_5$ à $T_7$, s'élèvent au-dessus de l'élément de cadre supérieur, et horizontal, $T_6$, de manière que, grâce à l'emploi de profilés en U, on peut monter, comme précédemment décrit, au-dessus du panneau de tête, des pièces cintrées décoratives en fer forgé, O et S. Les panneaux de pied, $T_1$ à $T_4$, et de tête, $T_5$ à $T_7$, sont assemblés entre eux, de chaque côté du lit, par des éléments horizontaux de tube carré, dont on voit seulement $T_8$ et $T_9$, et entre lesquels les pièces décoratives en fer forgé, cintrées en S, peuvent être insérées et fixées comme précédemment décrit. Ce lit est supporté par quatre pieds tubulaires tels que q1, q2, q3, qui sont montés comme les pieds du bahut de la figure 19.

La table illustrée sur la figure 21 comporte un piètement formé par deux éléments de tube carré, horizon-

taux, $T_1$ et $T_2$, servant de ou portant des pièces; un élément horizontal de tube carré, $T_3$, est raccordé aux parties médianes des éléments $T_1$ et $T_2$, par l'intermédiaire d'organes mécaniques de jonction $O_1$ et $O_2$. Ceux-ci supportent des éléments d'armature verticaux $T_4$ et $T_5$, dont les extrémités supérieures sont elles-mêmes fixées, par des organes de jonction tels que $O_3$, au milieu des petits côtés d'un plateau rectangulaire de table, Ct. Ce plateau est constitué par un panneau rectangulaire selon la présente invention, de l'un des types décrits précédemment, et comportant de préférence des barreaux et des pièces cintrées ornementales en fer forgé, la face supérieure du plateau Ct étant entièrement recouverte par une plaque de verre, dont les bords sont encastrés avec précision entre les quatre éléments de cadre du panneau Ct, de telle sorte que la face supérieure de la table soit parfaitement lisse et sans solution de continuité. La face inférieure du panneau Ct peut également être pourvue d'une plaque rigide, également en verre ou de préférence en un matériau opaque décoratif. Bien entendu, le piètement $T_1$-$T_2$-$T_3$ ainsi que les montants $T_4$ et $T_5$ de la table peuvent être munis de pièces décoratives en fer forgé, cintrées en O et en S, ces pièces cintrées étant assujetties aux éléments tubulaires correspondants, ainsi qu'entre elles, par les moyens précédemment décrits.

La présente invention n'est pas limitée à la réalisation des meubles et objets illustrés sur les figures 17 à 21; elle englobe tous les meubles et objets, très divers, qui peuvent être montés à l'aide du système selon la présente invention.

Les figures 22 à 24 représentent des modes de réalisation particuliers d'assemblage d'un barreau sur une pièce cubique telle que celle qui a été mentionnée en regard des figures 1 à 7 présentant des taraudages au centre de chacune de ses faces. Comme précédemment, l'objet de ces modes de réalisation est l'obtention d'angles droits de raccordement qui ne laissent pas apparaître le mode de fixation.

Sur la figure 22, la pièce cubique D est fixée sur deux barreaux, non référencés, perpendiculaires l'un à l'autre. L'assemblage d'un troisième barreau $T_1$ est obtenu de la façon suivante : un manchon $M_1$ présente un alésage $a_1$ à travers lequel passe une vis $v_1$, tête creuse à six pans. Par action sur la tête de la vis $v_1$, le mandrin est appliqué et serré contre la face correspondante de la pièce cubique D. Puis, le barreau $T_1$ est glissé sur le mandrin et la position du barreau est verrouillée par vissage de la vis $v_2$ qui pénètre à travers l'ouverture $a_2$ dans le taraudage $t_1$.

Sur la figure 23, l'assemblage est réalisé à l'aide d'une pièce $M_2$ formant manchon qui peut être avantageusement réalisée en tôle emboutie. Ce manchon est vissé et amené en butée contre la face correspondante de la pièce cubique D par pénétration de la tige filetée $v_3$ à l'intérieur du taraudage de la pièce D. Comme cela apparaît sur la figure, le manchon $M_2$ présente dans ses parois latérales des créneaux $C_2$ dans lesquels viennent s'appuyer les pattes p d'une pièce en étrier E présentant un taraudage central. Dans un premier temps, après vissage du manchon $M_2$ sur la pièce cubique D, les pièces E portant chacune une vis sont disposées à l'intérieur du manchon $M_2$. Le barreau $T_2$ est alors glissé sur le manchon $M_2$ et l'on procède au vissage des vis $v_4$ à travers les orifices $O_1$. L'action de vissage produit un écartement des pattes p qui viennent s'appliquer à l'extérieur des créneaux contre les parois internes du barreau $T_2$. Elles maintiennent ainsi solidement ce barreau en position.

Sur la figure 24, la liaison mécanique entre le barreau $T_1$ et la pièce cubique est obtenue grâce à une pièce intermédiaire constituée de deux coins respectivement avant $M_{11}$ et arrière $M_{12}$ à l'intérieur desquels passe une tige filetée $t_1$ présentant deux filetages de sens opposés respectivement sur sa partie avant $t_{11}$, et sur sa partie arrière $t_{12}$. Le coin avant $M_{11}$ présente un alésage $a_3$ permettant le passage pur et simple de la tige filetée $t_1$ alors que le

0028193

coin arrière $M_{12}$ présente un taraudage $t_{21}$ pouvant coopérer avec le filetage $t_{12}$ de la tige $t_1$. Le taraudage du coin arrière $M_{12}$ peut d'ailleurs être remplacé par un écrou soudé comme cela apparaît dans le bas de la figure. Dans un premier temps, on enfile l'ensemble constitué par les deux coins $M_{11}$, $M_{12}$ dans le barreau $T_1$ et l'on amorce les prises de filetage de la tige $t_{11}$ respectivement dans le taraudage de la pièce cubique D et dans le taraudage $t_{21}$ du coin arrière $M_{12}$. Le serrage se fait alors en tournant le barreau $T_1$ par rapport à la pièce cubique D, de manière que les coins glissent l'un sur l'autre et viennent ainsi porter contre les parois internes du tube $T_1$. Avantageusement, une vis, non représentée, disposée à la partie inférieure du tube $T_1$, permet de bloquer l'assemblage lorsqu'il est dans sa position convenable.

Il va de soi que des modifications peuvent être apportées aux modes de réalisation qui viennent d'être décrits, notamment par substitution de moyens techniques équivalents, sans sortir pour cela du cadre de la présente invention.

## REVENDICATIONS DE BREVET

1.- Système pour monter soi-même, sans soudure, ni collage, ni perçage, des meubles ou autres objets de types très divers, comportant de préférence des pièces en fer forgé, qui forment par exemple des motifs ornementaux, système caractérisé en ce qu'il comporte au moins deux éléments d'armature ou de cadre ($T_1$, $T_2$) constitués chacun par un profilé qui présente sur sa surface latérale extérieure au moins un plat s'étendant sur au moins une partie de la longueur du profilé, notamment un profilé métallique à section creuse polygonale, par exemple carrée, au moins un organe mécanique de jonction ($O_{12}$) pour les extrémités rapprochées de deux éléments d'armature ($T_1$, $T_2$) au moins deux profilés à section en U, ($U_1$, $U_2$) dont chacun peut être fixé par sa semelle ($s_1$, $s_2$) le long du plat de l'un des éléments d'armature ($T_1$, $T_2$) par des moyens amovibles tels que des clips (C ) ou des vis, ainsi que des éléments plats, de préférence en fer forgé, tels que des barreaux droits ($B_{11}$, $B_{21}$, $B_{22}$)et ou des pièces ornementales, cintrées par exemple en O, en S ou en spirales, chaque élément plat ayant une largeur (e) voisine de l'écartement (E) des ailes (a,b) de chaque profilé en U ($U_1$, $U_2$) de manière que les extrémités desdits barreaux ou bien des parties desdites pièces cintrées puissent être engagées dans les profilés en U, ($U_1$, $U_2$) fixés aux éléments d'armature ($T_1$, $T_2$) et y être elles-mêmes éventuellement fixées par des moyens amovibles appropriés.

2.- Système selon la revendication 1, caractérisé en ce que les différents éléments plats, tels que des barreaux droits ($B_{11}$, $B_{21}$, $B_{22}$) ou des pièces cintrées (O,S) peuvent, lorsqu'ils sont juxtaposés, être assujettis les uns aux autres, de préférence par des pinces ($P_1$, $P_2$, $P'_2$) formant ressort.

3.- Système selon la revendication 2, caractérisé en ce que chaque pince ($P_1$, $P_2$, $P'_2$) est formée par une lame de ressort pliée en U ou en W, les extrémités des deux ailes étant de préférence repliées vers l'intérieur de la pince, d'un angle ($\alpha$) notablement inférieur à 90 degrés.

4.- Système selon la revendication 3, caractérisé en ce que l'ouverture de chaque pince en U ou en W, en position de serrage de plusieurs éléments plats juxtaposés, peut être fermée par un capuchon (Ca) venant coiffer les extrémités repliées des ailes de la pince, une lame de ressort (L), fixée en son milieu sur la face intérieure dudit capuchon (Ca), étant dimensionnée et cintrée de façon à venir s'engager en dessous des extrémités repliées des ailes de la pince.

5.- Système selon la revendication 2, caractérisé en ce que chaque pince comporte deux pièces en forme de U, ($P_3$, $P_4$) réalisées en tôle emboutie, et dimensionnées de façon à pouvoir être engagées l'une dans l'autre en embrassant les parties juxtaposées de plusieurs éléments plats, avec un certain serrage.

6.- Système selon la revendication 5, caractérisé en ce que l'une ($P'_4$) des deux pièces en U ($P_3$, $P'_4$) de chaque pince destinée à assujettir deux éléments plats juxtaposés, comporte elle-même un élément plat intermédiaire ($P_5$), fixé par une extrémité au milieu de la semelle de la pièce en U, ($P'_4$) et s'étendant à peu près parallèlement à, et à égales distances de ses deux ailes .

7.- Système selon l'une quelconque des revendications 1 à 6, caractérisé en ce que chaque organe mécanique de jonction ($O_{12}$) pour deux éléments d'armature en tube ($T_1$, $T_2$) par exemple à section carrée, comporte une pièce cubique (D) et au moins un manchon ($M_1$) qui est adaptable à l'intérieur d'un élément d'armature tubulaire ($T_1$, $T_2$) et peut être assujetti à l'une des faces de la pièce cubique (D), à l'aide de moyens de fixation amovible.

8.- Système selon la revendication 7, caractérisé en ce que certaines au moins des six faces de la pièce cubique (D) sont taraudées, de préférence en leur centre, pour la fixation des manchons ($M_1$) correspondants

au moyen de vis (V), chaque vis (V) traversant, et prenant appui, par sa tête, sur une paroi ($c_1$, $c_2$) qui ferme l'une des extrémités du manchon ($M_1$).

9.- Système selon l'une quelconque des revendications 7 et 8, caractérisé en ce que chaque manchon ($M_1$) peut être assujetti dans un élément tubulaire d'armature ($T_1$, $T_2$) près d'une extrémité de cet élément, par au moins une vis (Pa) traversant la paroi dudit élément tubulaire ($T_1$, $T_2$).

10.- Système selon l'une quelconque des revendications 7 et 3, caractérisé en ce que chaque manchon ($M_1$) est un élément de tube à section rectangulaire, comportant deux parois carrées ($c_1$, $c_2$) perforées pour le passage de la tige de la vis (V) de fixation du manchon ($M_1$) à la pièce cubique (D), et deux parois rectangulaires, ($r_1$, $r_2$) suffisamment minces et élastiques pour se cintrer vers l'extérieur du manchon ($M_1$) lorsque la tête de ladite vis (V) de fixation est serrée contre la paroi carrée ($c_1$) du manchon ($M_1$) opposée à la pièce cubique (D), de façon à bloquer le manchon ($M_1$) à l'intérieur de l'élément tubulaire d'armature ($T_1$).

11.- Panneau rectangulaire ou carré, réalisé à l'aide du système selon l'une quelconque des revendications 1 à 10, caractérisé en ce qu'il comporte au moins un cadre rectangulaire ou carré, formé par quatre éléments de cadre, dont les extrémités rapprochées deux à deux sont assujetties entre elles par quatre organes mécaniques de jonction, les plats desdits éléments de cadre sur lesquels quatre profilés en U sont fixés de façon amovible, étant tournés vers l'intérieur du cadre, de manière que les éléments plats engagés partiellement dans lesdits profilés en U, se trouvent sensiblement dans le plan du cadre.

12.- Panneau selon la revendication 11, caractérisé en ce qu'au moins une plaque (P$\ell$) d'un matériau rigide, tel que du verre, du bois ou un matériau synthétique approprié, est assujettie au panneau par des moyens amovibles, de façon à recouvrir au moins partiellement ses éléments plats.

13.- Panneau selon la revendication 12, caractérisé en ce que la plaque rigide a la même forme que le cadre, mais des dimensions un peu inférieures à ses dimensions intérieures, et que les bords de ladite plaque sont fixés aux ailes des profilés en U par des moyens amovibles, tels que des crochets doubles $(Cr)$, constitués chacun par une lame élastique mince, pliée en S.

14.- Système selon la revendication 7, caractérisé en ce que l'organe mécanique de jonction $(O_{12})$ étant constitué par une pièce cubique $(D)$ percée au centre de chacune de ses faces d'un taraudage $(t)$, un élément d'armature $(T_1)$ est glissé sur un manchon $(M_1)$ présentant un alésage central $(a_1)$ permettant le passage d'une vis de fixation $(v_1)$, l'élément d'armature $(T_1)$ étant bloqué sur le manchon $(M_1)$ par l'intermédiaire d'une seconde vis $(v_2)$.

15.- Système selon la revendication 7, caractérisé en ce que le manchon de liaison $(M_2)$ entre la pièce cubique $(D)$ et l'élément de l'armature $(T_1)$ présente au moins deux créneaux $(C_2)$ à l'intérieur desquels passent les pattes $(p)$ d'une pièce en étrier $(E)$, lesdites pattes $(p)$ venant au contact des parois internes de l'armature tubulaire $(T_1)$ par action sur une vis $(v_4)$ coopérant avec ledit étrier $(E)$.

16.- Système selon la revendication 7, caractérisé en ce que le manchon précité adaptable à l'intérieur d'un élément d'armature tubulaire $(T_1)$ est constitué de deux coins respectivement avant $(M_{11})$ et arrière $(M_{12})$ à travers lesquels passe une tige filetée $(t_1)$ dont les sens de filetage aux deux extrémités $(t_{11}, t_{12})$ sont opposées.

17.- Applications des panneaux selon l'une quelconque des revendications 11 à 13, à la réalisation de portes, de fenêtres, de cloisons fixes ou mobiles, de grilles de balcon, de plateaux de tables, et de meubles divers.

18.- Meubles et objets divers, réalisés à l'aide du système selon l'une quelconque des revendications 1 à 10.

Fig. 1

Fig. 2

0028193

1/5

*Fig. 3*

*Fig. 4*

*Fig. 5*

*Fig. 6*

*Fig. 7*

*Fig. 8*

*Fig. 9*

*Fig. 11*

*Fig. 10*

*Fig. 12*

0028193

*Fig.15*

*Fig.13*

*Fig.14*

*Fig.16*

0028193

**Fig.17**

**Fig.18**

**Fig.19**

**Fig.20**

**Fig.21**

*Fig.22*

5/5

0028193

*Fig.23*

*Fig.24*

# RAPPORT DE RECHERCHE EUROPEENNE

**Office européen des brevets**

0028193

Numéro de la demande

EP 80 40 1508

## DOCUMENTS CONSIDERES COMME PERTINENTS

| Catégorie | Citation du document avec indication, en cas de besoin, des parties pertinentes | Revendication concernée |
|---|---|---|
| | <u>CH - A - 599 450</u> (CHAPUISAT) <br> * Page 2, ligne 67 - page 3, ligne 3; figure 2 * <br><br> -- | 1,11, 17,18 |
| | <u>US - A - 4 045 104</u> (PETERSON) <br> * Colonne 2, lignes 48-52; revendication 3; figure 1 * <br><br> -- | 1,11, 17,18 |
| | <u>DE - A - 2 250 541</u> (ZSCHERNITZ) <br> * Revendications 1,7,8; figures 7-10 * <br><br> -- | 2,3 |
| | <u>US - A - 3 745 615</u> (OBERREICH) <br> * Colonne 2, ligne 64 - colonne 3, ligne 5; figures 1,7 * <br><br> -- | 2-4 |
| | <u>FR - A - 1 304 766</u> (ARIEX) <br> * Résumé 1-5 * <br><br> -- | 7,8, 14 |
| | <u>FR - A - 2 250 877</u> (ELMADUC) <br> * Revendication 1* <br><br> -- | 10 |
| | <u>FR - A - 2 310 725</u> (MABY) <br> * Page 6, lignes 17-20; figures 3,12 * <br><br> -- <br><br> ./. | 12,13 |

**CLASSEMENT DE LA DEMANDE (Int. Cl. 3)**

A 47 B 47/00
F 16 B 12/40//
E 06 B 9/01

**DOMAINES TECHNIQUES RECHERCHES (Int. Cl. 3)**

A 47 B
E 04 F
E 06 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 27-01-1981 | VAN DER WAL |

OEB Form 1503.1  06.78

**Office européen des brevets**

## RAPPORT DE RECHERCHE EUROPEENNE

| Catégorie | Citation du document avec indication, en cas de besoin, des parties pertinentes | Revendica-tion concernée |
|---|---|---|
| **DOCUMENTS CONSIDERES COMME PERTINENTS** | | |
| A | BE - A - 659 105 (BOBBY-PLAST) | |
| A | CH - A - 464 497 (HABLUTZEL) | |
| | ---- | |

**CLASSEMENT DE LA DEMANDE (Int. Cl. ³)**

**DOMAINES TECHNIQUES RECHERCHES (Int. Cl. ³)**